# FASCICULE DE BREVET EUROPEEN

(11) **EP 3 063 067 B1**
(45) Date de publication et mention de la délivrance du brevet: **02.05.2018**
(21) Numéro de dépôt: 14825386.7
(22) Date de dépôt: 29.10.2014
(51) Int. Cl.: B64D 41/00, F02C 7/26, F02C 7/268, F02C 7/275

(54) **PROCÉDÉ ET SYSTÈME DE GÉNÉRATION DE PUISSANCE AUXILIAIRE DANS UN AÉRONEF**
VERFAHREN UND SYSTEM ZUR ERZEUGUNG VON HILFSSTROM IN EINEM FLUGZEUG
METHOD AND SYSTEM FOR GENERATING AUXILIARY POWER IN AN AIRCRAFT

(30) Priorité: 31.10.2013 FR 1360732
(43) Date de publication de la demande: 07.09.2016
(73) Titulaire: Safran Power Units, 31200 Toulouse (FR)
(72) Inventeur: RIDEAU, Jean-François, F-31170 Tournefeuille (FR)
(74) Mandataire: Regimbeau
(86) Numéro de dépôt international: PCT/FR2014/052748
(87) Numéro de publication internationale: WO 2015/063414

(56) Documents cités:
- EP-A1- 2 554 482
- GB-A- 2 020 367
- US-A- 2 941 790
- US-A- 5 845 479
- US-A1- 2010 293 961
- US-B1- 6 941 760

## Description

### Domaine de l'invention

L'invention concerne un procédé et un système de génération de puissance auxiliaire dans un aéronef.

### Présentation de l'Art Antérieur

Certains aéronefs, comme les avions commerciaux ou régionaux, sont équipés de moteurs principaux servant à la propulsion, et d'une unité auxiliaire de puissance (en anglais APU, « *Auxiliary Power Unit* ») comprenant une turbine à gaz et destinée à fournir de l'énergie non propulsive au sol et en vol lorsque le ou les moteurs principaux ne sont pas en mesure de le faire.

Certaines certifications d'aéronefs, comme la certification ETOPS (« *Extended-range Twin-engine Operation Performance Standards* ») requièrent une capacité de démarrage à froid de l'unité auxiliaire de puissance à très haute altitude (entre 39.000 et 41.000ft suivant les porteurs).

La tendance est d'augmenter ce plafond, avec des exigences de redémarrage de l'unité 6 auxiliaire de puissance à 43.000ft, voire 45.000ft.

Or, à ces altitudes, la densité de l'air ambiant est faible, la température extérieure basse et la quantité de carburant nécessaire au démarrage faible et difficile à doser.

Le démarrage de l'unité auxiliaire de puissance devient alors difficile et requiert des phases de mise au point longues et coûteuses.

En outre, il est difficile de maintenir une fenêtre d'allumage pendant une durée suffisante pour démarrer la turbine à gaz de l'unité auxiliaire de puissance.

Enfin, plus l'altitude de l'aéronef est élevée, plus la fenêtre d'allumage est étroite, et donc difficile à détecter et maintenir.

### Présentation de l'invention

L'invention propose un procédé de génération de puissance auxiliaire dans un aéronef, comprenant les étapes consistant à démarrer une unité auxiliaire de puissance de l'aéronef en fournissant un air comprimé à l'unité auxiliaire de puissance à partir d'un compresseur volumétrique, et à transférer une énergie non propulsive depuis l'unité auxiliaire de puissance vers l'aéronef.

L'invention est avantageusement complétée par les caractéristiques suivantes, prises seules ou en une quelconque de leur combinaison techniquement possible :
- démarrer l'unité auxiliaire comprend alimenter l'unité auxiliaire de puissance avec de l'air provenant uniquement du compresseur volumétrique;
- lors d'une phase transitoire, alimenter l'unité auxiliaire de puissance avec de l'air provenant du compresseur volumétrique et de l'air ambiant;
- lors d'une étape ultérieure, alimenter l'unité auxiliaire de puissance avec uniquement de l'air ambiant.

L'invention concerne en outre un système de génération de puissance auxiliaire dans un aéronef, comprenant une unité auxiliaire de puissance d'aéronef, comprenant une entrée d'air, et étant configurée pour fournir de l'énergie non propulsive à l'aéronef en complément ou à la place de moteurs principaux de l'aéronef, et un compresseur volumétrique connecté à l'entrée d'air de l'unité auxiliaire de puissance, le compresseur volumétrique étant configuré pour fournir un air comprimé en entrée de l'unité auxiliaire de puissance, pour le démarrage de ladite unité.

Ce système est avantageusement complété par les caractéristiques suivantes, prises seules ou en une quelconque de leur combinaison techniquement possible :
- le système comprend un starter générateur, configuré pour entraîner le compresseur volumétrique et l'unité auxiliaire de puissance ;
- le système comprend un outil de découplage configuré pour découpler le compresseur volumétrique d'un arbre de l'unité auxiliaire de puissance ;
- le système comprend une vanne de régulation du débit entre une sortie d'air du compresseur et l'entrée d'air de l'unité auxiliaire de puissance ;
- le compresseur volumétrique présente un débit d'air compris entre 0.1 et 0.2 kg.s⁻¹, une vitesse de rotation inférieure à 10.000 tr.min⁻¹, une puissance supérieure ou égale à 15kW, et un taux de compression compris entre 5 et 10 bars.

L'invention concerne également un aéronef comprenant ce système.

L'invention offre de nombreux avantages.

L'invention permet de démarrer l'unité auxiliaire de puissance de manière efficace et contrôlée, même à très haute altitude. En outre, le démarrage est plus rapide et moins coûteux que les systèmes de l'art antérieur.

### Présentation des figures

D'autres caractéristiques et avantages de l'invention ressortiront encore de la description qui suit, laquelle est purement illustrative et non limitative, et doit être lue en regard des dessins annexés sur lesquels :
- la Figure 1 représente schématiquement une queue d'avion comprenant un système de génération de puissance auxiliaire ;
- la Figure 2 représente un exemple de compresseur volumétrique à vis ;
- la Figure 3 représente un exemple de compresseur volumétrique à spirale ;
- la Figure 4 représente un starter générateur connecté à un compresseur volumétrique via une boîte accessoire ;
- la Figure 5 représente des étapes d'un procédé de génération de puissance auxiliaire dans un aéronef.

### Description détaillée

### Système de génération de puissance auxiliaire

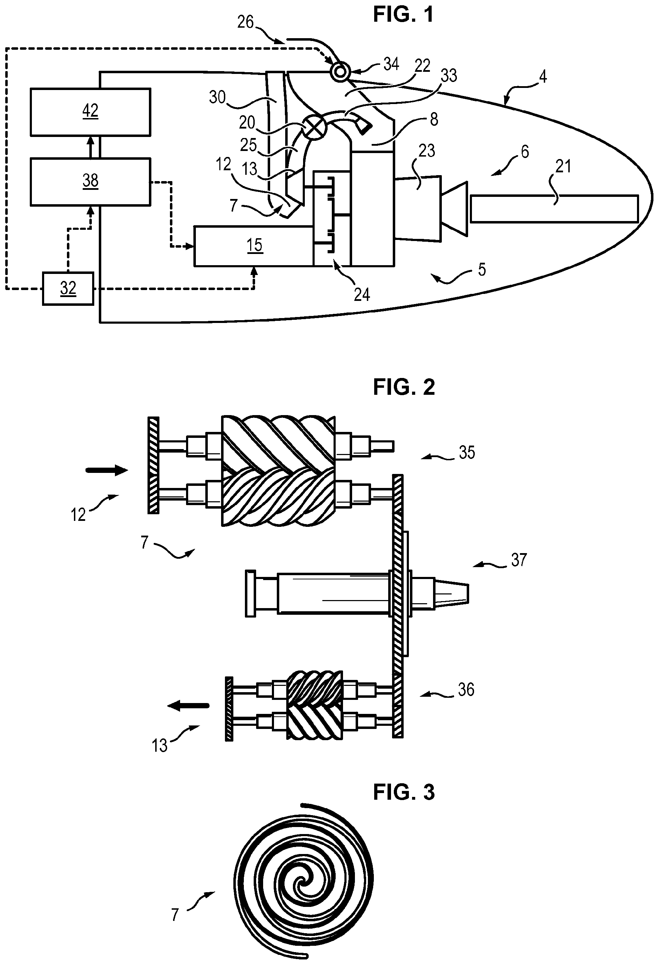

La Figure 1 représente schématiquement un système 5 de génération de puissance auxiliaire d'un aéronef. Ce système 5 est classiquement disposé au niveau de la queue 4 arrière de l'aéronef.

Le système 5 comprend une unité 6 auxiliaire de puissance. L'unité 6 comprend classiquement une turbine 23 à gaz, une entrée 8 d'air et un échappement 21. L'unité 6 auxiliaire de puissance est configurée pour fournir de l'énergie non propulsive à l'aéronef en complément ou à la place de moteurs principaux de l'aéronef. Par exemple, l'unité 6 auxiliaire de puissance peut être utilisée pour démarrer les moteurs principaux, ou pour alimenter des équipements de bord (climatisation, pressions pneumatiques et hydrauliques, etc.).

En particulier, l'unité 6 est destinée à fournir de l'énergie au sol et en vol lorsque les moteurs principaux ne sont pas en mesure de le faire.

Un canal 22 d'entrée d'air s'étend depuis l'entrée 8 d'air vers l'extérieur, afin de connecter cette entrée 8 d'air à l'air ambiant.

Une porte 26, commandée par un vérin 34, s'étend à l'interface entre l'entrée du canal 22 et l'air ambiant. Cette porte 26 peut obturer totalement ou partiellement l'entrée du canal 22, et ainsi laisser passer l'air ambiant de manière variable vers l'unité 6 auxiliaire de puissance. Le cas échéant, la porte 26 n'obture pas l'entrée du canal 22 et permet une libre circulation de l'air ambiant vers l'entrée 8 d'air de l'unité 6.

Le système 5 de génération de puissance auxiliaire comprend en outre un compresseur 7 volumétrique.

Ce compresseur 7 comprend une entrée 12 d'air, connectée par un conduit 30 à l'air ambiant. Le compresseur 7 comprend en outre au moins une sortie 13 d'air, par laquelle il expulse l'air comprimé.

La sortie 13 d'air du compresseur 7 est connectée à l'entrée 8 d'air de l'unité 6 auxiliaire de puissance par l'intermédiaire d'un canal 25 se terminant par une trompe 33.

Ainsi, le compresseur 7 volumétrique est configuré pour fournir un air comprimé en entrée de l'unité 6 auxiliaire de puissance, pour le démarrage de ladite unité 6.

Le compresseur 7 volumétrique est par exemple, mais non limitativement, un compresseur oscillant ou un compresseur rotatif.

Les compresseurs volumétriques présentent l'avantage de pouvoir fournir un air énergétique (c'est-à-dire présentant notamment une pression suffisante) dès des vitesses faibles des parties mobiles du compresseur.

Selon un exemple particulier, il s'agit d'un compresseur rotatif mono-axe ou multi-axes à vis (Figure 2) ou à spirale (Figure 3).

Dans le cas d'un compresseur à vis, il est avantageux de choisir un compresseur bi-étage, qui présente un refroidissement à air. Comme illustré en Figure 2, le premier étage 35 et le deuxième étage 36 sont reliés par une roue libre 37.

Il est avantageux de disposer d'un compresseur 7 présentant un refroidissement à air. Cependant, un refroidissement à huile peut également être mis en oeuvre, en connectant le compresseur 7 au circuit à huile de l'unité 6.

Des performances de démarrage optimales de l'unité 6 peuvent être obtenues avec un compresseur volumétrique présentant les caractéristiques suivantes :
- un débit d'air en sortie compris entre 0.1 et 0.2 kg.s⁻¹,
- une vitesse de rotation (du mécanisme de la pompe) inférieure à 10.000 tr.min⁻¹,
- une puissance supérieure ou égale à 15kW ;
- un taux de compression compris entre 5 et 10 bars.

Toutefois, ces valeurs ne sont pas limitatives et dépendent des conditions de vol, de l'altitude de démarrage requise, des performances recherchées, de l'unité 6, de l'aéronef, etc.

Le système 5 comprend également un starter générateur 15, qui est en général un organe moteur démarré électriquement, configuré pour entraîner l'unité 6 auxiliaire de puissance et le compresseur 7 volumétrique.

Le starter générateur 15 est connecté à une boîte accessoire 24, qui comprend un train de pignons permettant de transmettre la puissance mécanique à différents organes mécaniques, comme par exemple le module de lubrification ou le fan de refroidissement. Le compresseur 7 volumétrique est lié mécaniquement à la boîte accessoire 24 ce qui permet de l'entraîner.

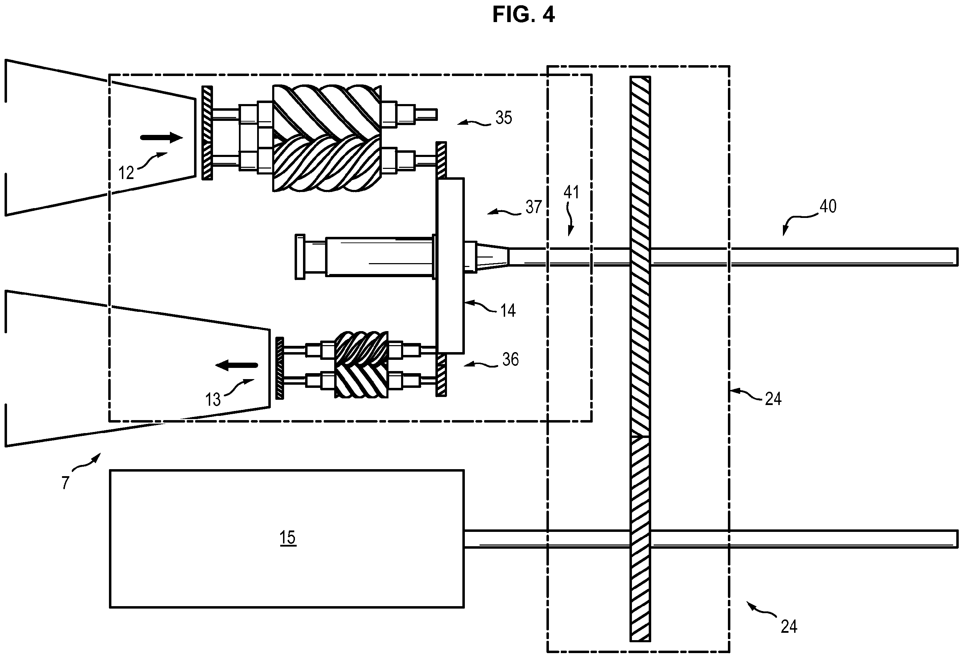

Comme on peut le voir sur la Figure 4, un arbre 40 de l'unité 6 et un arbre 41 du compresseur 7 sont entraînés par la boîte accessoire 24.

Pour entraîner le compresseur volumétrique 7, l'utilisation d'un starter générateur est nécessaire car un démarreur classique ne permet pas de délivrer suffisamment de puissance. En effet, un démarreur alimenté par le réseau 28V est limité à 12kW. Or la puissance minimale d'un compresseur volumétrique pour APU est de l'ordre de 15kW.

Le starter générateur 15 est contrôlé électriquement par une électronique 38 de puissance du système 5. Cette électronique 38 de puissance est connectée au réseau 42 électrique de l'aéronef. L'électronique 38 de puissance est elle-même contrôlée par une unité 32 de contrôle (ECU, « *Electronic Control Unit* »).

Le système 5 comprend en outre un outil 14 de découplage configuré pour découpler mécaniquement le compresseur volumétrique 7 de l'arbre 41 de l'unité 6, au-delà d'une vitesse de rotation seuil du compresseur 7 volumétrique.

En d'autres termes, une fois que le compresseur 7 a atteint une vitesse de rotation prédéterminée, il ne fournit plus d'air comprimé en sortie.

L'outil 14 est par exemple une roue libre 37 pouvant se découpler des axes 40 et 41. Le découplage est réalisé automatiquement, dès que la vitesse de rotation seuil est atteinte.

Selon un exemple de réalisation, le système 5 comprend une vanne 20 de régulation du débit entre la sortie 13 d'air du compresseur et l'entrée 8 d'air de l'unité 6 auxiliaire de puissance. Cette vanne 20 peut notamment être disposée dans le canal 25 reliant la sortie 13 d'air du compresseur et l'entrée 8 d'air de l'unité 6 auxiliaire de puissance.

Cette vanne 20 permet de réguler la fourniture en air du compresseur 7 de celle de l'unité 6. En particulier, étant donné que la vitesse de rotation du compresseur 7 conditionne la pression et le débit en sortie du compresseur 7, la vanne 20 permet de décorréler le débit de la pression en sortie du compresseur 7.

### Procédé de génération de puissance auxiliaire dans un aéronef

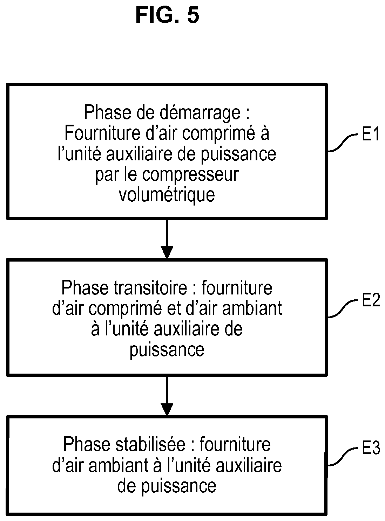

Un procédé de génération de puissance auxiliaire dans un aéronef peut être mis en oeuvre grâce au système 5 de génération de puissance auxiliaire décrit précédemment. Le pilotage du procédé est réalisé par l'unité 32 de contrôle. Un schéma d'un tel procédé est fourni en Figure 5.

Lors d'une phase de démarrage, l'unité 6 auxiliaire de puissance est démarrée (étape E1) en recevant de l'air comprimé fourni par le compresseur 7 volumétrique. En d'autres termes, la turbine à gaz commence à fonctionner grâce à l'air comprimé fourni par le compresseur 7.

Le compresseur 7 volumétrique est quant à lui démarré via le starter générateur 15, par l'intermédiaire de la boîte accessoire 24, et permet de fournir un air énergétique en entrée de l'unité 6, bien que l'air ambiant soit froid et présente une densité faible à l'altitude à laquelle l'aéronef se trouve (par exemple, altitude supérieure à 41.000 ft). Ainsi, le système 5 permet de simuler une altitude de l'aéronef plus faible, et donc de démarrer plus facilement l'unité 6.

Le starter générateur 15 permet également de fournir de l'énergie à l'unité 6 lors de son démarrage, celui-ci fournissant de l'énergie à un compresseur de l'unité 6 auxiliaire.

Lors de cette phase de démarrage, l'unité 6 auxiliaire est en général alimentée par de l'air provenant uniquement du compresseur 7 volumétrique. Par conséquent, la porte 26, sur commande du vérin 34, obture l'entrée du canal 22.

Au démarrage de l'unité 6, celle-ci ne requiert pas un débit élevé, et la fenêtre d'allumage, c'est-à-dire les paramètres de l'air fourni en entrée de l'unité 6 (richesse, température, pression, débit) doivent se trouver dans des intervalles maîtrisés.

Après le démarrage de la turbine à gaz de l'unité 6, la turbine à gaz commence à entrer dans un régime de divergence. Ce régime peut être qualifié de transitoire.

Au fur et à mesure de la divergence, de plus en plus d'air est nécessaire au fonctionnement de l'unité 6.

Par conséquent, l'unité 6 auxiliaire de puissance est alimentée par de l'air provenant du compresseur 7 volumétrique et par de l'air ambiant (étape E2) provenant de l'extérieur de l'aéronef. Il s'agit donc d'une alimentation mixte.

A cet effet, la porte 26 est progressivement ouverte afin de n'obturer que partiellement l'entrée du canal 22.

La commande du vérin 34 est pilotée par l'unité 32 de contrôle qui ouvre la porte 26 en fonction de l'altitude de l'aéronef et de la vitesse de rotation du compresseur 7.

Lorsque la vitesse de rotation du compresseur 7 dépasse une vitesse de rotation seuil, l'unité 6 auxiliaire de puissance est alimentée uniquement par de l'air ambiant (étape E3).

A cet effet, l'outil 14 de découplage découple mécaniquement le compresseur volumétrique 7 de l'arbre de l'unité 6, ce qui implique que celui-ci ne fournit plus d'air comprimé en entrée de l'unité 6.

En outre, la porte 26 est totalement ouverte, permettant à l'air ambiant de pénétrer librement dans le canal 22 vers l'entrée de l'unité 6. Ce régime est un régime stabilisé dans lequel la turbine à gaz de l'unité 6 est dans un régime stabilisé.

Le starter générateur 15 fonctionne alors en tant que générateur (et non plus en tant que starter).

Le cas échéant, la vanne 20 de régulation du débit est contrôlée afin de réguler le débit en sortie du compresseur 7 sans modifier la pression en sortie du compresseur 7. Le débit d'air à destination de l'unité 6 est donc découplé de la pression de l'air à destination de l'unité 6. Le pilotage comprend donc un degré de liberté en plus permettant de décorréler la pression d'air du débit d'air émis par le compresseur 7.

Le système 5 de génération de puissance auxiliaire peut notamment être mis en oeuvre dans un aéronef, comme par exemple un avion commercial ou régional.

## Revendications

1. Procédé de génération de puissance auxiliaire dans un aéronef, comprenant l'étape consistant à :
- démarrer une unité (6) auxiliaire de puissance de l'aéronef en fournissant un air comprimé à l'unité (6) auxiliaire de puissance à partir d'un compresseur (7) volumétrique, et
- transférer une énergie non propulsive depuis l'unité (6) auxiliaire de puissance vers l'aéronef.

2. Procédé selon la revendication 1, dans lequel démarrer l'unité (6) auxiliaire comprend alimenter l'unité (6) auxiliaire de puissance avec de l'air provenant uniquement du compresseur (7) volumétrique.

3. Procédé selon la revendication 1, comprenant l'étape consistant à, lors d'une phase transitoire, alimenter l'unité (6) auxiliaire de puissance avec de l'air provenant du compresseur (7) volumétrique et de l'air ambiant.

4. Procédé selon la revendication 1, comprenant l'étape ultérieure consistant à alimenter l'unité (6) auxiliaire de puissance avec uniquement de l'air ambiant.

5. Système (5) de génération de puissance auxiliaire dans un aéronef, comprenant :
- une unité (6) auxiliaire de puissance, comprenant une entrée (8) d'air, et étant configurée pour fournir de l'énergie non propulsive à l'aéronef en complément ou à la place de moteurs principaux de l'aéronef,
**caractérisé en ce qu'**il comprend :
- un compresseur (7) volumétrique connecté à l'entrée (8) d'air de l'unité (6) auxiliaire de puissance,
- le compresseur (7) volumétrique étant configuré pour fournir un air comprimé en entrée de l'unité (6) auxiliaire de puissance, pour le démarrage de ladite unité (6).

6. Système selon la revendication 5, comprenant un starter générateur (15), configuré pour entraîner le compresseur (7) volumétrique et l'unité (6) auxiliaire de puissance.

7. Système selon l'une des revendications 5 ou 6, dans lequel le compresseur (7) volumétrique comprend un outil (14) de découplage configuré pour découpler le compresseur volumétrique (7) d'un arbre de l'unité (6) auxiliaire de puissance.

8. Système selon l'une des revendications 5 à 7, comprenant une vanne (20) de régulation du débit entre une sortie (13) d'air du compresseur et l'entrée (8) d'air de l'unité (6) auxiliaire de puissance.

9. Système selon l'une des revendications 5 à 8, dans lequel le compresseur (7) volumétrique présente :
- un débit d'air en sortie compris entre 0.1 et 0.2 kg.s⁻¹,
- une vitesse de rotation du mécanisme inférieure à 10.000 tr.min⁻¹,
- une puissance supérieure ou égale à 15kW, et
- un taux de compression compris entre 5 et 10 bars.

10. Aéronef comprenant un système (5) de génération de puissance auxiliaire selon l'une des revendications 5 à 9.

## Patentansprüche

1. Verfahren zur Erzeugung von Hilfsstrom in einem Luftfahrzeug, umfassend den Schritt, der darin besteht:
- Starten einer Hilfsstromeinheit (6) des Luftfahrzeugs durch Bereitstellen einer Druckluft an die Hilfsstromeinheit (6) von einem Superlader (7), und
- Übertragen einer nicht propulsiven Energie von der Hilfsstromeinheit (6) an das Luftfahrzeug.

2. Verfahren nach Anspruch 1, wobei Starten der Hilfseinheit (6) umfasst, die Hilfsstromeinheit (6) mit Luft zu versorgen, die ausschließlich von dem Superlader (7) kommt.

3. Verfahren nach Anspruch 1, umfassend den Schritt, der in einer Übergangsphase darin besteht, die Hilfsstromeinheit (6) mit Luft zu versorgen, die von dem Superlader (7) kommt, und mit Umgebungsluft.

4. Verfahren nach Anspruch 1, umfassend den späteren Schritt, der darin besteht, die Hilfsstromeinheit (6) nur mit Umgebungsluft zu versorgen.

5. System (5) zur Erzeugung von Hilfsstrom in einem Luftfahrzeug, umfassend:
- eine Hilfsstromeinheit (6), umfassend einen Lufteinlass (8), und der konfiguriert ist, um dem Luftfahrzeug in Ergänzung oder anstelle von Hauptmotoren des Luftfahrzeugs nicht propulsive Energie bereitzustellen,
**dadurch gekennzeichnet, dass** es umfasst:
- einen Superlader (7), der mit dem Lufteinlass (8) der Hilfsstromeinheit (6) verbunden ist,
- wobei der Superlader (7) konfiguriert ist, um eine Druckluft am Eingang der Hilfsstromeinheit (6) für das Starten der Einheit (6) bereitzustellen.

6. System nach Anspruch 5, umfassend einen Starter-Generator (15), der konfiguriert ist, um den Superlader (7) und die Hilfsstromeinheit (6) anzutreiben.

7. System nach einem der Ansprüche 5 oder 6, wobei der Superlader (7) ein Entkopplungswerkzeug (14) umfasst, das konfiguriert ist, um den Superlader (7) von einer Welle der Hilfsstromeinheit (6) zu entkoppeln.

8. System nach einem der Ansprüche 5 bis 7, umfassend ein Regulierventil (20) des Durchsatzes zwischen einem Luftauslass (13) des Laders und dem Lufteinlass (8) der Hilfsstromeinheit (6).

9. System nach einem der Ansprüche 5 bis 8, wobei der Superlader (7) aufweist:
- einen Luftdurchsatz am Ausgang zwischen 0,1 und 0,2 kg.s⁻¹,
- eine Rotationsgeschwindigkeit des Mechanismus unter 10.000 U.min⁻¹,
- eine Leistung von über oder gleich 15 kW, und
- einen Kompressionsgrad zwischen 5 und 10 bar inklusive.

10. Luftfahrzeug, umfassend ein System (5) zur Erzeugung von Hilfsstrom nach einem der Ansprüche 5 bis 9.

## Claims

1. A method for generating auxiliary power in an aircraft, including the step consisting of:
- starting an auxiliary power unit (6) of the aircraft by supplying compressed air to the auxiliary power unit (6) from a volumetric compressor (7), and
- transferring non-propulsive energy from the auxiliary power unit (6) to the aircraft.

2. The method according to Claim 1, wherein starting the auxiliary unit (6) includes supplying the auxiliary power unit (6) with air coming only from the volumetric compressor (7).

3. The method according to Claim 1, including the step consisting of, during a transitional phase, supplying the auxiliary power unit (6) with air coming from the volumetric compressor (7) and ambient air.

4. The method according to Claim 1, including the subsequent step consisting of supplying the auxiliary power unit (6) only with ambient air.

5. A system (5) for generating auxiliary power in an aircraft, including:
- an auxiliary power unit (6), including an air inlet (8), and being configured to supply non-propulsive energy to the aircraft supplementing or replacing the main engines of the aircraft,
**characterized in that** it includes:
- a volumetric compressor (7) connected to the air inlet (8) of the auxiliary power unit (6),
- the volumetric compressor (7) being configured to supply compressed air at the inlet of the auxiliary power unit (6), for starting said unit (6).

6. The system according to Claim 5, including a starter generator (15), configured to drive the volumetric compressor (7) and the auxiliary power unit (6).

7. The system according to one of Claims 5 or 6, wherein the volumetric compressor (7) includes a decoupling tool (14) configured to decouple the volumetric compressor (7) of a shaft of the auxiliary power unit (6).

8. The system according to one of Claims 5 to 7, including a valve (20) for controlling the flow rate between an air exhaust (13) of the compressor and the air inlet (8) of the auxiliary power unit (6).

9. The system according to one of Claims 5 to 8, wherein the volumetric compressor (7) has:
- an output air flow rate comprised between 0.1 and 0.2 kg.s⁻¹,
- a rotation speed of the mechanism less than 10,000 rpm,
- power greater than or equal to 15 kW, and
- a compression rate comprised between 5 and 10 bars.

10. An aircraft including a system (5) for generating auxiliary power according to one of Claims 5 to 9.
